# EUROPEAN PATENT SPECIFICATION

(11) **EP 0 669 681 B1**
(45) Date of publication and mention of the grant of the patent: **06.12.2000**
(21) Application number: 95107320.4
(22) Date of filing: 31.01.1991
(51) Int. Cl.: H01R 13/713

(54) **Improvements relating to electrical appliances**
Verbesserungen in Bezug auf elektrische Geräte
Améliorations relatives aux appareils électriques

(30) Priority: 31.01.1990 GB 9002135; 02.03.1990 GB 9004678; 24.04.1990 GB 9009166
(43) Date of publication of application: 30.08.1995
(62) Divisional of application: 91300780.3
(73) Proprietor: OTTER CONTROLS LIMITED, Buxton, Derbyshire SK17 6LA (GB)
(72) Inventor: O'Neill, Robert Andrew, Buxton, Derbyshire SK17 9NQ (GB); Gaeta, Antonio Martin, Buxton, Derbyshire (GB); White, Ian Geoffrey, Buxton, Derbyshire (GB); Ettridge, Ian Geoffrey, Stourbridge, West Midlands (GB)
(74) Representative: Milhench, Howard Leslie

(56) References cited:
- GB-A- 2 194 099
- GB-A- 2 208 336
- US-A- 4 754 122

## Description

### Field of the Invention:

This invention concerns improvements relating to electrical appliances and particularly electrical appliances of the so-called "cordless" type comprising an appliance proper and a base unit (or holder), in which electrical connection to the appliance proper is made by locating the appliance proper on a base unit connected to the mains electrical supply, the appliance proper and the base unit having co-operating connection systems operative to power the appliance proper via the base unit when the appliance proper is located on the base unit. Examples of such cordless appliances are electric smoothing irons, power tools and hot water jugs, kettles and like water heating vessels.

### Background of the Invention:

Various proposals have been made for the construction of the electrical connection systems of cordless appliances and, in so far as we are aware, all of such proposals have required the utilization of special (i.e. non-standard) connector parts on the appliance or of standard connector parts mounted in a special fashion. For example in EP-A-0332445 (D.H. Haden Ltd.) there is described an electric kettle wherein the connector of the kettle is mounted in the base of the kettle rather than in a side wall of the kettle as would conventionally be the case. In GB-A-2215920 (D.H. Haden Ltd.) there is described yet another arrangement where specially configured connector parts can be selectively coupled either to the appliance or to its stand so that the appliance can be used selectively in a corded or a cordless manner. Other special connector arrangements are described in GB-A-2208336 (Strix Ltd.) where special connector parts are coupled to the standard terminals of an electrical appliance, namely a hot water jug, to enable it to be utilized in a cordless fashion, and in GB-A-2208332 (Strix Ltd.), GB-A-2209633 (Strix Ltd.) and EP-A-0342050 (Strix Ltd.). These prior proposals illustrate the considerable efforts that have been made to design special connector systems for cordless appliances.

Another problem of conventional cordless appliance base units is that they are generally constructed as two plastics mouldings secured together to form a cavity within which means for securing the power supply cable are located. These means typically take the form of ribs designed to form a meander in the cable which prevents movement of the cable should it be pulled away from the base. The use of two plastics mouldings necessitates two sets of moulding tools and requires a number of fastening devices arranged to ensure that the two mouldings cannot become separated during use, since this would expose live electrical parts. Because of the relatively large area and flat section of these mouldings, distortion of the mouldings is likely to occur and hence numerous fasteners, typically four to six, are required. The connector part of such base units is typically clamped or secured by means of further fasteners between the two mouldings and protrudes from the mouldings to facilitate the access of the appliance proper connector to the base unit connector. Such a system of construction is expensive in tooling, expensive in materials, and expensive in manufacturing time.

### Summary of the Invention:

The present invention resides in the appreciation that it is not in point of fact necessary to design special connector systems for cordless appliances and that, with appropriate design of the base unit, connection can readily be made to a conventional connector provided on the appliance proper. As will be explained in the following, the present invention can give rise to significant cost savings in manufacture, particularly where the appliance proper is fitted with protective control which incorporates a standard electrical power connector. The invention also enables the appliance proper to be used in a corded or cordless manner as desired.

According to the present invention therefore there is provided an electrical appliance of the cordless type comprising an appliance proper and a base unit wherein the appliance proper has a standard power supply connector provided with its terminal pins horizontal (or substantially so), as is conventional for corded appliances, and wherein the base unit has a co-operating connector adapted to make electrical connection to the terminal pins of the appliance proper when it is seated on the base. As will be appreciated, such an arrangement is advantageous furthermore in that the appliance proper can be used as desired in a corded or cordless manner.

In an exemplary embodiment of the invention which will be described in detail hereinafter, a cordless water heating appliance comprising a vessel part and a base part, has its vessel part fitted with an X12 element protection device manufactured by us, the X12 device being substantially as described in GB-A-2194099 (Otter Controls Ltd.) with reference particularly to Figures 3A, 3B and 3C thereof, but with the lower shelf part of the socket inlet shroud omitted to facilitate access to the terminal pins. The base part has a connector comprising shuttered spring terminals housed within an upstand which is adapted to mate with the X12 socket inlet shroud when the vessel part is located on the base. The shutter serves to prevent access to the spring terminals when the vessel part is removed from the base and is advantageously arranged to be displaced when the vessel part is seated on the base so as to permit the spring terminals to move into contact with the X12 terminal pins, the earth terminal pin of the X12 device moving the shutter against spring bias as the vessel is seated on the base. The movement of the spring terminals in the base into contact with the X12 terminal pins is arranged to be generally in a horizontal direction which has the advantage that the integrity of the connections made between the spring terminals in the base and the X12 terminal pins is substantially independent of the weight of the vessel part; in previous proposals this has not generally been the case and defective connections have resulted.

The aforementioned X12 element protection device includes thermally-responsive switch means arranged to be responsive to the temperature of the heating element of an electrically heated water boiling appliance and adapted to disconnect the appliance heating element from its power supply in a sensed element over temperature condition. More particularly, the thermally-responsive switch means in the X12 device includes a bimetal mounted in a thermally-collapsible carrier, the bimetal being responsive to a predetermined element overtemperature condition to open a set of switching contacts through the intermediacy of a push-rod, and the carrier serving a secondary or back-up control function to open circuit the connection between the terminations of the appliance heating element and the X12 device terminals in the event of failure of the primary bimetal control. Furthermore, the X12 device provides a facility described in British Patent Application No. GB-2212664 (Otter Controls Ltd.) for connecting a steam sensor switch to the X12 device, the steam sensor switch serving to disconnect the supply of power to the appliance heating element when water boils in the appliance.

The X12 device is a fairly complex device having superlative characteristics and is well suited to the provision of element protection and boil sensing functions in an electrically heated water boiling appliance. However, for some applications the complexity of the internal switch mechanisms of the X12 device may be unnecessary or undesirable. The present invention in another aspect thus further resides in the appreciation that the internal push-rod actuated switching contacts of the X12 device could be omitted from such a device adapted for use in a cordless appliance if the push-rod were to be extended through the device and arranged to act upon the live and/or neutral spring terminals of the base connector part of the cordless appliance so that the electrical connection of the powered base part of the appliance to the appliance part would be dependent upon the condition of the thermally-responsive bimetal of the X12 device. In similar fashion, as the X12 device has provision for the attachment thereto of a steam sensing switch, so in accordance with the teachings of this aspect of the present invention a steam sensor in the appliance part could be arranged to act through a mechanical linkage (a Bowden cable for example) upon the spring terminals provided in the base connector part.

More generally, therefore, there is provided an appliance of the cordless type having power connection terminal pins on the appliance part arranged to cooperate with terminal springs provided in a base unit or other mating part for supplying power to the appliance part, and wherein a control provided on the appliance part is arranged through the intermediacy of a mechanical linkage to determine the capability of the terminal pins and terminal springs to supply power to the appliance part.

In accordance with the general technical concept of the present invention, as defined by the features of claim 1 there is provided a cordless appliance comprising an appliance part and a base part, wherein the appliance part has a protective control and the same connectors as are used to supply power through the base part to the appliance part by interconnecting with each other are also used to disconnect the appliance part from the power supply as a result of the functioning of the protective control.

It is particularly to be understood that the last-mentioned aspect of the present invention is not limited to modification of the X12 control, but rather is capable of much wider application. Furthermore, whilst the invention is seen as having particularly advantageous application to cordless type water heating appliances wherein the control provided in the appliance proper is an element overtemperature protection device and/or a steam sensing device, the invention is to be clearly understood to have wider application for example to cordless smoothing irons, power tools, etc. Additionally, whilst the X12 control has its own terminal pins and might be modified in accordance with the teachings of the present invention by provision of one or more push rods running alongside, or through passages in, the terminal pins and adapted to determine the coupling between the tips of the terminal pins and the terminal springs in the connector in the base part of the appliance, it is clearly within the ambit of the present invention that the terminal pins do not constitute an integral part of the control but rather are separate therefrom. Clearly, furthermore, it is possible for the control provided in the appliance part to operate on either or both of the current carrying terminal pins.

The present invention additionally concerns the provision of a means for securing a power supply cable to the base unit connector part of a cordless electrical appliance in such a way that compliance with international standards relating to cable security on appliances (eg. BS 3456) may be readily and inexpensively assured, contrary to the prior art arrangements hereinbefore described. In accordance with the aspects of the teachings of the present invention, the connector of the base unit is preferably formed as a unitary structure adapted to be received within an accommodating cavity provided in the base unit and secured thereto by a minimum number of separate fasteners, and a cable clamping arrangement is provided as an integral part of a plastics moulding forming part of the base unit connector.

The above and additional features of the invention are set forth with particularity in the appended claims and will be best understood from consideration of the following detailed description of exemplary embodiments which is given with reference to the accompanying drawings.

### Brief Description of the Drawings:

Figure 1 is a schematic side view, partly in section, showing an X12 control as manufactured by us fitted to a water heating vessel, and showing the co-operating connector part of an exemplary base unit, the X12 control and the connector part of the base unit being shown spaced apart from each other one above the other;
Figure 2 shows the X12 control and the base unit connector part shown in engaged condition;
Figure 3 is a schematic end elevation view illustrating the co-operation of the terminal pins of the X12 control with the spring terminals in the base unit connector part;
Figures 4A and 4B are enlarged scrap perspective views showing details of the shuttering of the base unit connector part;
Figures 5A and 5B are front and rear exploded views illustrating in detail the construction of a base unit connector part similar to that of the foregoing Figures;
Figures 6A, 6B, 6C and 6D are different plan, elevation and perspective views of the base unit connector part shown in Figure 5;
Figure 7 shows a bottom plan view of a further embodiment of a base unit connector according to the present invention which incorporates an integral cable clamp;
Figure 8 shows a side elevation view of the base unit connector of Figure 7;
Figure 9 shows a perspective view of the base unit connector of Figure 7;
Figure 10 is a perspective view showing how the base unit connector of Figures 7 to 9 is adapted to be mounted into a cavity formed in a moulded plastics base;
Figures 11A and 11B are views showing the underside of a base unit connector similar to that of Figures 7, 8 and 9 but with a different form of cable clamp, Figure 11A showing use of the connector with a round three-core cable and Figure 11B showing use of the connector with a flat three-core cable; and Figure 12 shows a perspective view of the underside of the base unit of Figures 11A and 11B.

### Detailed Description of the Embodiments:

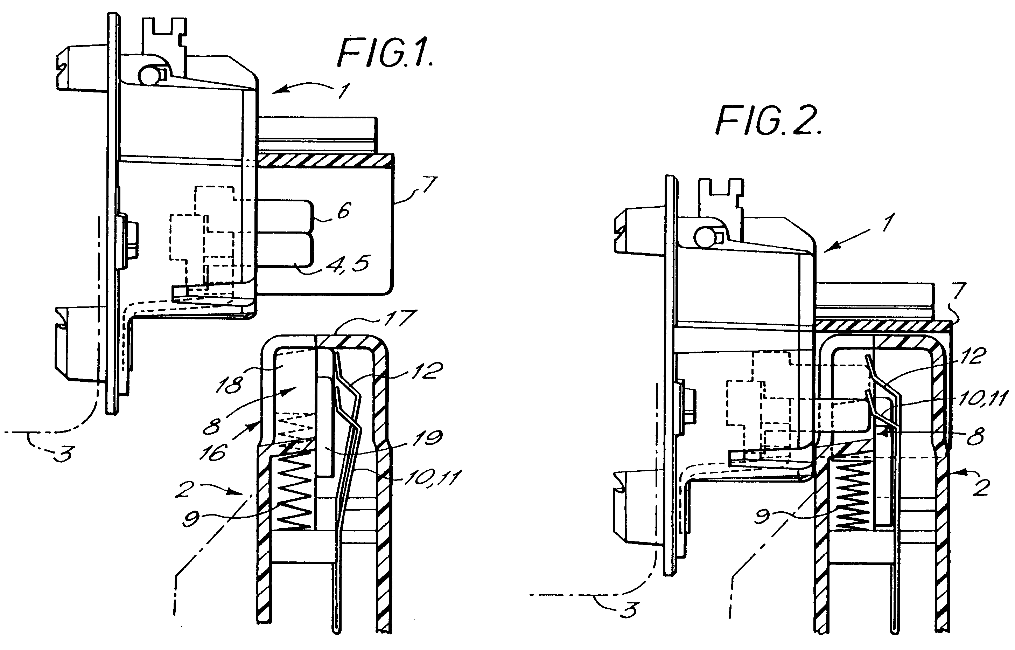

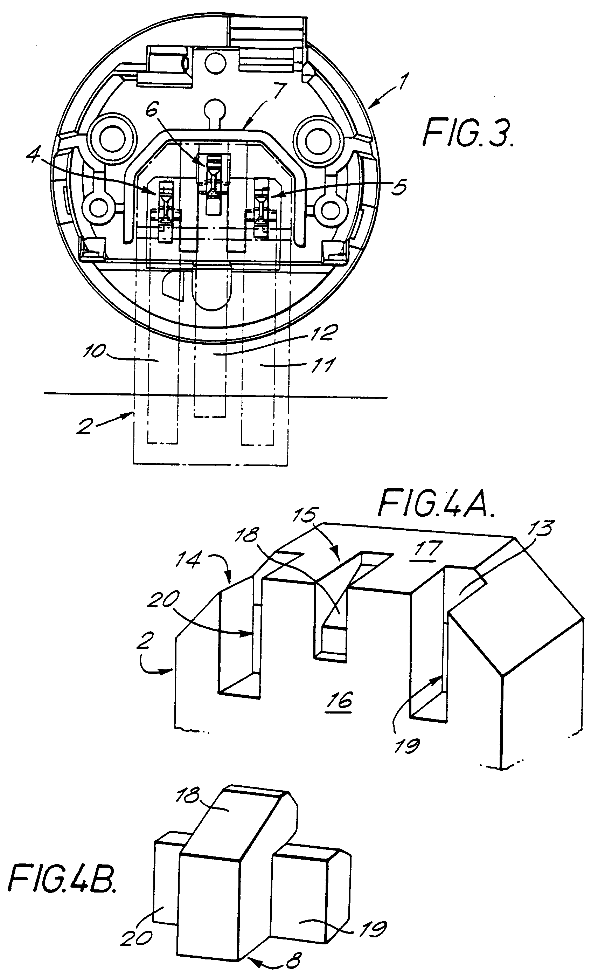

Referring first to Figure 1, an X12 device is designated 1 and a co-operating base unit connector part is designated 2. As abovementioned, the X12 device 1 is substantially as described in GB-A-2194099 with reference to Figures 3A, 3B and 3C thereof, and as shown in Figure 1 hereof is attached in conventional manner to a side wall of a schematically-illustrated water heating vessel 3. As is described in GB-A-2194099, the X12 device has the function of interrupting the supply of electrical power to a heating element within the vessel 3 in the event of an element overtemperature condition occurring, for example as a result of the vessel being powered without there being any water in it. The means whereby this protective function is achieved is not especially material to the present invention and will not be described further herein at this point. All that need be said in this regard is that the X12 device 1 has live, neutral and earth terminal pins 4, 5 and 6 within a hooded or open-based socket inlet shroud 7 and incorporates within the body of the device thermally-responsive switch means for interrupting the electric circuit from the live and neutral pins 4, 5 to the vessel heating element in the event of an element overtemperature condition.

The arrangement of the terminal pins of the X12 device and of the socket inlet shroud is fully conventional and enables the vessel 3 to be used in a corded manner, if desired, with a standard 10 amp kettle type connector plug (not shown) plugged into the socket inlet shroud 7 and making contact with the terminal pins. This arrangement is adapted also to enable the vessel to be used in a cordless manner with a base unit incorporating the illustrated connector part 2 as will now be described.

The connector part 2 comprises a moulded plastics upstand from the base part of the appliance which is shaped to mate with the socket inlet shroud 7 of the X12 device 1 when the vessel part of the appliance is set down onto the base. Although not illustrated in the drawing, it will be understood that the vessel and/or the base part of the appliance may include formations designed to ensure proper mating of the connector part 2 with the socket inlet shroud 7 of the X12 device 1 when the vessel part is seated on the base. Within the connector part 2 there is provided a moulded plastics shutter 8 which is spring biassed towards a closed position by means of a coil spring 9, and three leaf-spring terminals 10, 11 and 12 which couple within the base unit 2 to the live, neutral and earth conductors of a power supply cord and are adapted to contact the live, neutral and earth terminal pins 4, 5 and 6 respectively when the vessel part 3 is seated upon the base and the shutter 8 is displaced to an open position.

Figures 4A and 4B are perspective views showing, to an enlarged scale, the upper part of the forward face of the connector part upstand 2 which is provided with recesses 13, 14 and 15 for accommodating the terminal pins 4, 5 and 6 of the X12 device, and showing, likewise to an enlarged scale, the general shape of the shutter 8. The recesses 13, 14 and 15 each open onto the forward and upper faces 16 and 17 of the upstand 2, as may best be seen in Figure 4A, and the shutter 8 has a central part 18 which co-operates with the earth pin recess 15 and is biassed upwards by the coil spring 9, as best seen in Figure 1, and side parts 19 and 20 which co-operate with the live and neutral pin recesses 13 and 14. The central part of the shutter presents a forwardly inclined upper surface towards the upper face 16 of the connector part upstand 2 to be contacted by the earth pin 6 of the X12 device 1 as the vessel 3 is lowered onto the base and urged downwardly against the action of coil spring 9. The side parts 19 and 20 of the shutter serve to close off respective openings that are provided in the rear walls of the recesses 13 and 14 when the shutter is in its uppermost, closed position, and it will be seen that the configuration of the shutter and its cooperation with the recesses 13 and 14 is such that the shutter will not open in response to forces applied vertically or horizontally within the line and neutral recesses. The shutter can only be opened by a force applied to its central part 18, and when it is urged bodily downwards by the action of the earth pin of the X12 device descending onto the central part 18, the openings in the rear walls of the recesses 13 and 14 are cleared by the side parts 19 and 20 of the shutter so as to enable the leaf springs 10 and 11 to move into contact with the ends of the live and neutral terminals 4 and 5 of the X12 device. In similar manner, the descending central part 18 of the shutter clears an opening in the back of the recess 15 and enables the earth leaf spring 12 to move into contact with the end of the earth terminal 6 of the X12 device. A comparison of Figures 1 and 2 will show the different positions adopted by the leaf springs 10, 11 and 12 when the shutter 8 is in its closed and open positions, and it is to be noted that the action of the shutter in closing moves the live parts away from the exposed surface of the connector to a distance which can readily meet international standards.

As can be seen from Figure 1, when the shutter 8 is in its upper, closed position the uppermost tips of the leaf springs 10, 11 and 12 press against the rear of the shutter. Stated differently, the closing shutter 8 urges the leaf springs 10, 11 and 12 backwards against their own resilience. The spring force of the leaf springs 10, 11 and 12 will thus oppose the initial opening movement of the shutter, but after this initial movement will, by virtue of the shape of the leaf springs, assist the shutter opening. This interactive arrangement of the shutter motion and the leaf spring force is advantageous since it allows a robust shutter closing spring force to be used which discourages improper operation of the shutter. The shutter can yet be freely opened by the weight of the appliance, after an increased initial force which can be developed by the impact of the earth terminal pin of the X12 device with the shutter. The respective spring forces can be selected to obtain the desired combination of initial force and ease of shutter opening.

The connection system as thus described makes use of the horizontal terminal pins 4, 5 and 6 which are a component of the X12 element protector itself. These pins are arranged in the standard layout of a 10 amp connector and preferably are of standard cross-section. They may be of standard length, or longer or shorter, and may be plated or unplated, or provided with a silver contact on their tips, as required. Since the pins are in a standard layout, they enable the X12 unit (or whatever other standard element protection unit may be employed) to be utilized in its standard form, which enables standard control assembly means and methods to be employed thus minimizing capital and other costs.

A preferred form of terminal pin providing excellent electrical characteristics in combination with superior wear characteristics comprises a copper pin, or a pin formed from a copper alloy having a thermal conductivity at least 90% that of copper, provided with a thick plating layer of silver and antimony. If a common brass pin with a 5 micron layer of essentially pure silver plating is used then the life of the contact effected by the pin to the base unit connector springs is around 1000 cycles of connection and disconnection. This may be increased to around 5000 cycles by use of a plating of 40 microns of essentially pure silver. This life may further be increased by use of a pin made from copper or a high thermal conductivity copper alloy, but a side effect is the formation of silver powder caused by abrasion of the contact surfaces which may lead to premature electrical breakdown. By the use of a plating of at least 30 microns and preferably 40 microns thickness comprising silver with a small amount of antimony, typically about 1% and particularly between 0.3% and 0.7%, on a pin formed of copper or a high thermal conductivity copper alloy, the formation of silver powder is inhibited and a life of about 70,000 cycles may be obtained. A silver antimony plating may be used to improve the performance of a brass pin, and a copper or high thermal conductivity copper alloy pin also obtains improved performance as compared to a brass pin, but the best results are obtained when these two improvements are combined. Accordingly the preferred form of control pin for cooperation with a base unit connector as herein described is a pin formed of copper or of a copper alloy having a thermal conductivity at least 95% and preferably 99% that of 99.95% pure copper, and having a plating layer of at least 30 microns and more preferably 40 microns thickness comprising fine silver (99.9% purity) with the addition of about 1% and more preferably between 0.3% and 0.7% of antimony.

The socket inlet shroud 7 of the X12 device provides a watershedding function to protect against ingress of water to electrically live parts of the appliance, and also serves in part to guide the vessel and base parts of the appliance into proper seated relationship which obviates or reduces the need for additional guidance components with resultant cost advantages. The design of the base connector part 2 also achieves a watershedding function with the vertical arrangement of the shutter and the arrangement of the recesses 13, 14 and 15 furthermore protecting the electrical components within the base connector part from moisture ingress.

The base connector part 2 has pin receiving recesses 13, 14 and 15 which open onto two adjacent faces of the connector, as described hereinbefore, and these enable the vessel part of the appliance to be engaged and disengaged from the base over a wide range of angles without risk of binding of the two parts in use. The fact that the contact forces between the terminal pins of the X12 device and the leaf springs in the base connector are generally horizontally directed also assists in this regard and has the further advantageous result that the contact force is not dependent on the weight of the vessel part of the appliance and is not applied until the two parts are fully (or almost fully) engaged. Hitherto, conventional arrangements have commonly been such that the weight of the appliance is required to overcome the closing force of the shutter and to provide contact forces for three connections and, particularly in the case of plastics bodied vessels of fairly light weight construction, contact forces have tended to be low. In contrast, the arrangement of the present invention provides for high contact forces which are advantageous for the safe functioning of the appliance, lessening the risk of overheating of the current conducting parts. Because the contact forces are developed only when the two parts are fully or almost fully engaged, any frictional effects which might otherwise inhibit the free operation of the connection system are minimised. In the present arrangement, there will additionally be a wiping or sliding action in the making of the contacts between the ends of the terminal pins of the X12 unit and the leaf springs in the base connector part and this sliding action is useful in avoiding contamination of the contacts.

The arrangement according to the invention thus provides for a cordless connection system which has no intermediate components between the control that is provided on the vessel and the contacts that are provided on the base, whilst at the same time enabling a standard form of corded appliance to be readily converted to cordless with minimal component changes. The vertical aspect of the terminal springs used in the base connector part also leads to a very compact construction which can be totally contained within the plan view of the control provided on the appliance proper, and this feature contributes to the minimizing of component changes as between corded and cordless variants of the same appliance design. Furthermore, the long thin design of the cantilevered contact springs in the base connector means that the stresses within the springs are of less value, so that low cost brass or the like may be used for their construction.

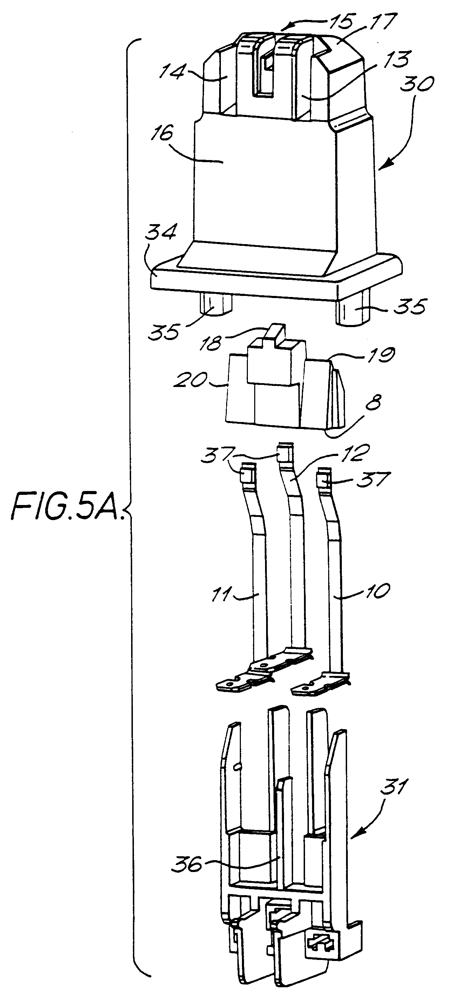

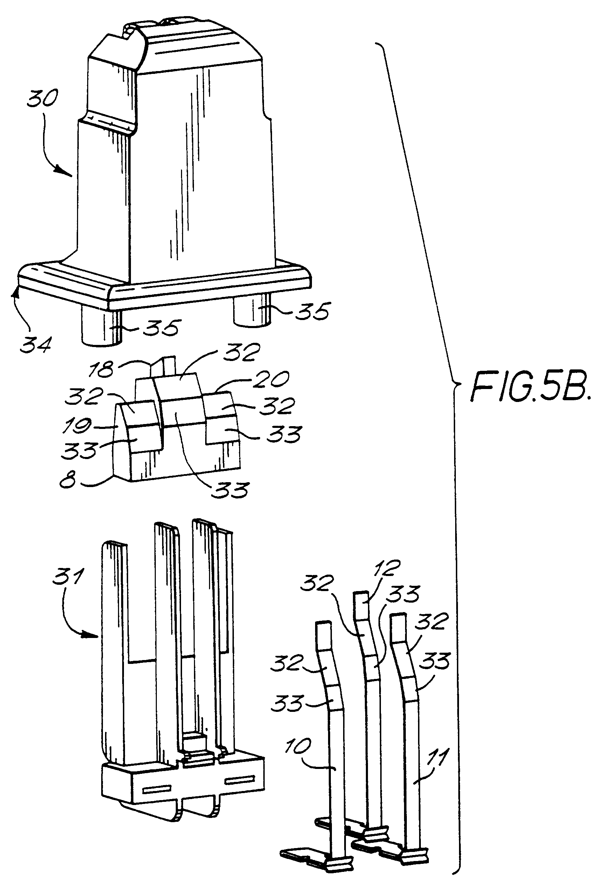

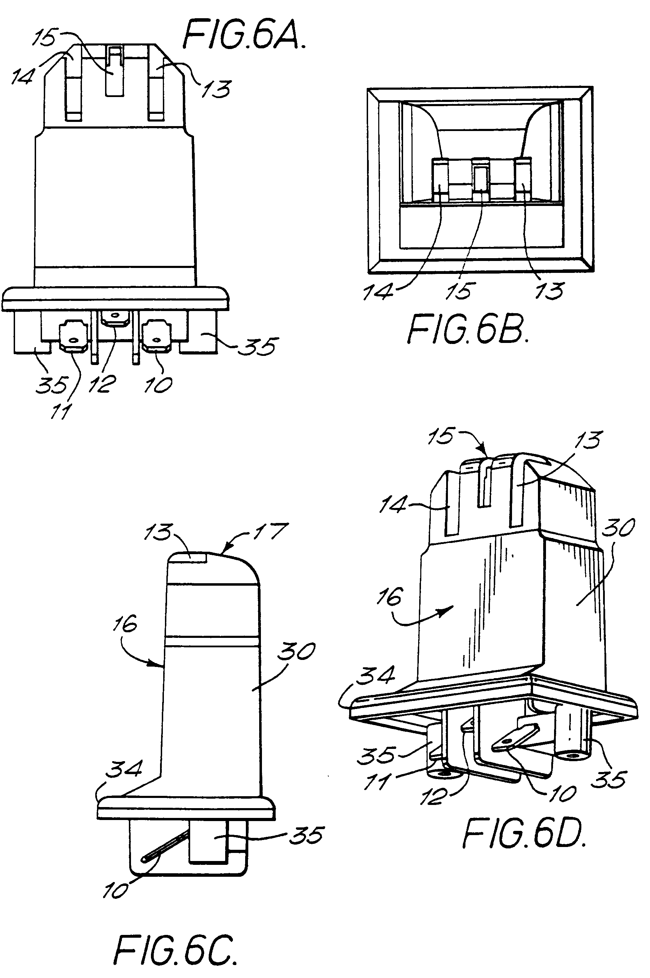

Figures 5A and 5B, and the various views of Figure 6 show the detailed internal and external construction of a base unit connector part upstand which is generally as described in the foregoing and has like parts identified by the same reference numerals. As shown, the upstand has recesses 13, 14 and 15 for accommodating the terminal pins 4, 5 and 6 of an X12 device or of any other device having a similar terminal pin layout, the recesses 13, 14 and 15 each opening onto the forward and upper faces 16 and 17 of the upstand. The shutter 8 has a central part 18 which co-operates with the earth pin recess 15 and is biassed upwards by the coil spring 9, and side parts 19 and 20 which co-operate with the live and neutral pin recesses 13 and 14. The central part of the shutter presents a forwardly inclined upper surface towards the upper face 16 of the connector part upstand to be contacted by the earth pin 6 of the X12 device 1 as the vessel 3 is lowered onto the base and urged downwardly against the action of coil spring 9. The side parts 19 and 20 of the shutter serve to close off respective openings that are provided in the rear walls of the recesses 13 and 14 when the shutter is in its uppermost, closed position, and when the shutter is urged bodily downwards by the action of the earth pin of the X12 device descending onto the central part 18 of the shutter, these openings are cleared by the side parts 19 and 20 of the shutter so as to enable the leaf springs 10 and 11 to move into contact with the ends of the live and neutral terminals 4 and 5 of the X12 device. In similar manner, the descending central part 18 of the shutter clears an opening in the back of the recess 15 and enables the earth leaf spring 12 to move into contact with the end of the earth terminal 6 of the X12 device.

As may be clearly seen from Figures 5A and 5B, the base connector part comprises a moulded plastics housing part 30 into which there is fitted a moulded plastics member 31 which serves as a mounting carrier for the leaf springs 10, 11, 12 and has wall portions which define within the interior of the housing part 30 appropriate accommodation for the shutter 8, for its biasing spring 9, and for the leaf springs 10, 11, and 12, ensuring proper clearances, shielding and screening between electrical parts. The leaf springs 10, 11, 12 are formed as metal pressings and have integral terminal parts adapted to be received in slots formed in the carrier 31 and then bent downwardly as may be seen in some of the views of Figure 6. The co-operating, complementary shapes of the upper ends of the leaf springs 10, 11, 12 and the rear surfaces of the shutter 8 upon which they bear can be clearly seen in Figure 5B where complementary flats on the shutter and on the springs are designated 32 and complementary radiussed portions are designated 33. Also of note in Figures 5A and 5B, and in the various views of Figure 6, is the provision of a water-shedding skirt 34 around the base of the housing 30, the provision of mounting elements 35 for accepting mounting screws, the provision of a post 36 on which the spring 9 seats, and the provision of silver contacts 37 on the ends of the leaf springs 10, 11, 12 for enhanced long-life switching operations.

The base unit connector described with reference to Figures 5A and 5B and the various views of Figure 6 is a practical realization of the schematically illustrated arrangement of the preceding Figures and obtains all of the heretofore described advantages thereof.

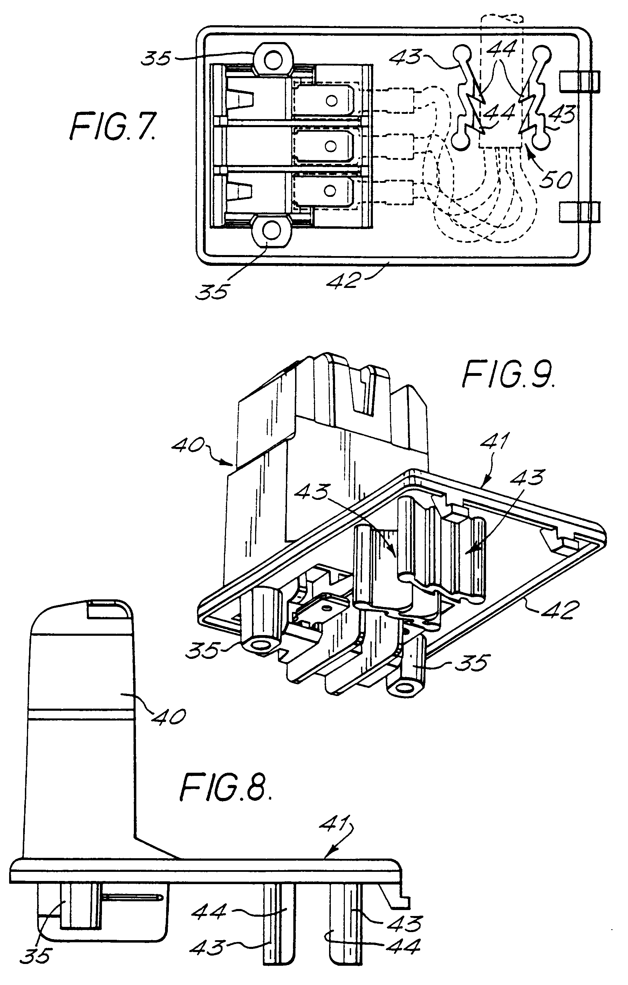

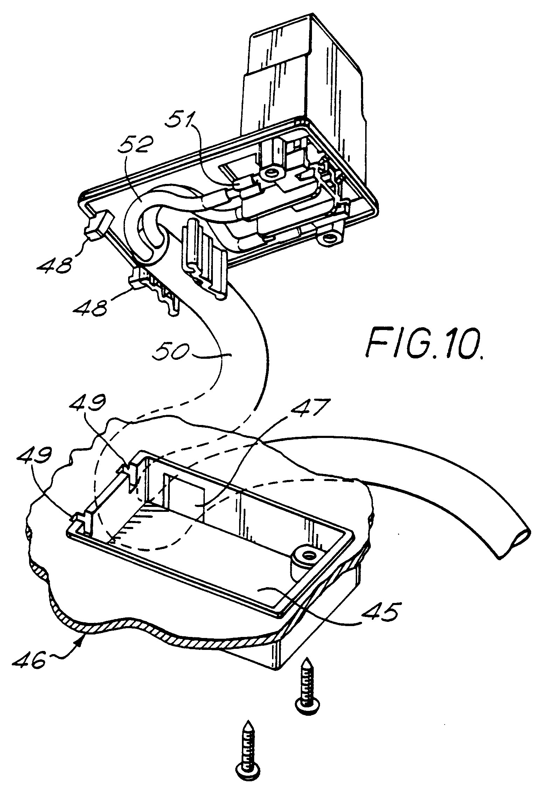

Referring now to Figures 7 to 10 these show a basic connector assembly 40 which is as described in the foregoing but with the connector provided with an extended skirt 41 which incorporates an integral cable clamp. The skirt has a water shedding edge 42 which is adapted to overlap the edge of an accommodating aperture provided in the base moulding. On the underside of the skirt 41 there are provided two integrally formed ribs 43 which form a cable securing means. As can be seen in Figures 7 and 10, the cable 50 is forced between the ribs 43 and is gripped by teeth 44 provided on the ribs which prevent the cable from being pulled lengthwise out of the cable clamp. Suitable receptacles 51 (see Figure 10) are provided on the stripped ends of the cable cores 52 to make connection to the electrical terminals of the base unit connector.

In Figure 10 the connector is shown positioned above a cavity 45 formed in a one-part base moulding 46. This cavity may have mating forms (not shown) to enhance the action of the ribs 43 in securing the cable. The cavity is also provided with a smooth orifice 47 for the exit of the cable 50. The base unit connector is arranged to be secured to the base moulding by the provision of lugs 48 on the connector skirt which engage with apertures 49 in the base moulding and by means of two screws which enter the holes provided in the mountings posts 35. The remaining part of the underside of the base moulding may, if desired, be provided with a set of ribs or bosses or other means (not shown) in order to provide a means of adjusting the free length of the cable.

The arrangement thus described provides a ready and convenient means of coupling the electrical power supply cable or a cordless appliance directly to the base unit connector part, and a ready and convenient means of coupling such base unit connector part to a base unit formed as a one piece moulding. Only two screw fasteners are required in order to secure the connector part to the base unit and the resulting assembly is rigid and not susceptible to distortion.

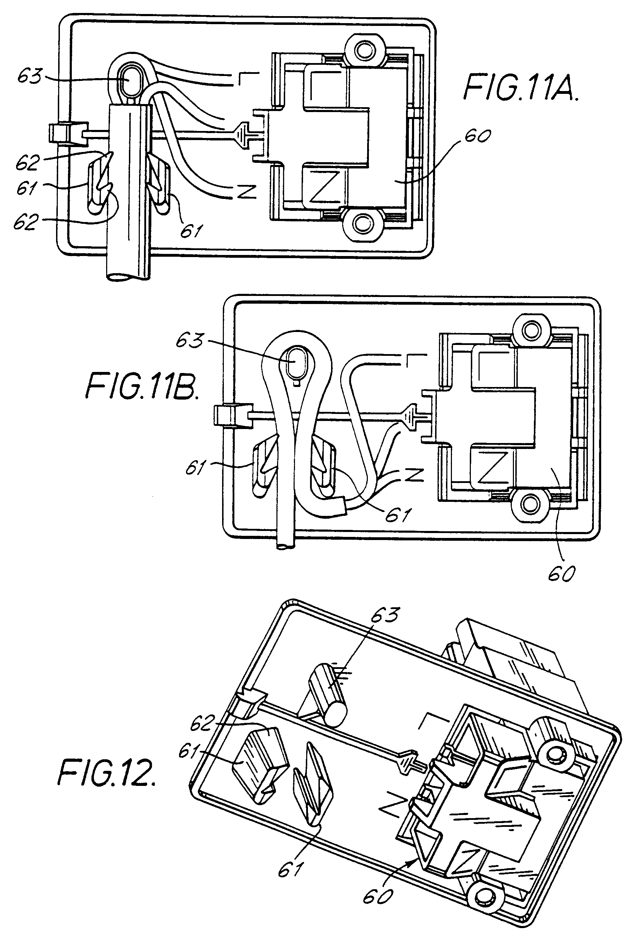

Figures 11A, 11B and 12 illustrate a further base unit connector similar to that just described but with a modified form of cable clamp and with the terminal parts of the contact springs of the connector screened within an integrally moulded part 60 of the internal moulding of the connector. As shown, the cable clamp comprises opposed formations 61 moulded integrally with the extended skirt portion of the connector and provided with teeth 62, and a post 63 spaced forwardly from the formations 61. Figure 11A shows how the cable clamp operates with a round three-core cable with two of the cable cores being wrapped around the post 63, and Figure 11B shows how the cable clamp operates with a flat three-core cable in which case the cable itself is looped around the post 63 and doubled back through the bite defined between the opposed toothed formations 61.

Having thus described the invention with particular reference to several embodiments, it is to be well appreciated that the described embodiments are exemplary only and that modifications and variations can be made without departure from the spirit and scope of the invention. For example, whilst the orientation of the connector parts shown for the described embodiments achieves the most advantages, the system could be adapted to other orientations with connector pin axes ranging from horizontal to vertical. Furthermore the vertical aspect of the base connector part could be retained, but with the appliance terminal pins inclined to the horizontal.

A modification of the above-described arrangements has been previously mentioned herein, primarily in the context of modification of the X12 device. In the X12 device as currently manufactured and substantially as described in GB-A-2194099 aforementioned herein, a snap-acting bimetal blade is held in a carrier which is urged against the rear surface of the head plate of a heating element when the X12 device is assembled to the heating element. The bimetal blade is coupled by means of a push-rod to a pair of switch contacts within the body of the X12 device so that in response to the bimetal sensing an element overtemperature condition and snapping to its opposite configuration the switch contacts will be opened by the push-rod thereby disconnecting the heating element from its power supply. The carrier is furthermore formed of a plastics material which will melt when subjected to a predetermined excess temperature and the X12 control is arranged so that, if such an excess temperature occurs and the carrier begins to melt, the connections that are made within the control to the live and neutral terminal pins of the control by means of leaf springs provided in the control will be broken. The action of the bimetal thus provides a primary control level and the provision of the melting carrier provides a secondary or back-up control level which becomes operative in the event of the primary control failing to operate. A further feature of the X12 control which is disclosed in GB-A-2212664 (Otter Controls Ltd) is that it includes a port providing access to spring connections within the control and enabling a steam sensor switch, for example, to be plugged into the control, either directly or via a lead, so that the control will automatically switch off the supply of electrical power to the appliance heating element when water boils in the appliance.

The modification of the X12 control that is proposed in accordance with this aspect of the present invention is to eliminate the push-rod actuated switch contacts from within the control and, in effect, to extend the push-rod through the control so that it acts instead upon the contact made between one or both of the live and neutral terminal pins of the control and the co-operating leaf springs in the base connector part. The bimetallic blade in the control would thus operate to determine whether or not the leaf springs in the base connector part could contact their respective co-operating terminal pins on the appliance part when the appliance is seated on the base; in this regard, it is of course the case that the protective functions of the X12 control are performed only when the appliance is seated on its base because it is only then that the heating element of the appliance can be powered.

The extension of the push-rod from the bimetal through the control could be a simple modification of the X12 device with appropriate rearrangements of its internal construction to allow passage of the extended push-rod which might exit the control and extend alongside the respective terminal pin (or pins) or through a passage formed in the terminal pin (or pins). The facility whereby a steam sensor can be coupled to the X12 device could similarly be modified in accordance with the teachings of this aspect of the present invention such that the steam sensor is coupled to the modified device via a mechanical linkage, such as a Bowden cable for example, so that the sensing of steam when water boils in the appliance causes the connection between the spring terminals in the base connector and the terminal pins of the control to be broken. Clearly it is possible for either or both of the bimetal and the steam sensor to operate on either or both of the current carrying terminal pins so as to break their connection to the respective leaf spring or springs.

The precise nature of the mechanical coupling that is provided between the bimetal of the thus modified X12 control and the terminal pins/leaf springs connections and that may also be provided between the steam sensor and the terminal pins/leaf springs connections is not the essence of this aspect of the present invention, and nor is the precise nature of the control device itself. The invention is not applicable only to modified X12 controls, though such a modified control is seen as possessing advantageous features, and is not restricted to bimetallic controls. The essence of this aspect of the present invention is that in a cordless appliance wherein the appliance part has protective controls, the same contacts as are used to supply power through the base to the appliance proper are also used to perform circuit disconnection as a result of the function or functions of the protective control.

## Claims

1. A cordless electrical appliance comprising an appliance part (3) and a base part, wherein the appliance part (3) has a protective control (1) and the same connectors (2, 7) as are used to supply power through the base part to the appliance part by interconnecting with each other when the appliance part is on the base part are also used to disconnect the appliance part from the power supply as a result of the functioning of the protective control.

2. A cordless electrical appliance comprising an appliance part (3) and a base part, the appliance part (3) being adapted to be set upon the base part for making electrical connection through a connector (2) provided in the base part to a connector (7) provided in the appliance part, and wherein the appliance part (3) includes a protective control (1) arranged to determine the ability of said connectors (2,7) to make electrical connection with each other.

3. A cordless electrical appliance as claimed in claim 2 wherein the protective control (1) comprises a thermally sensitive actuator which operates at a certain predetermined temperature, one of the connectors (2,7) having at least one terminal part which is operatively connected with the actuator of said control (1) and is arranged to be movable with respect to the other of said connectors whereby, when the actuator operates, the at least one terminal part is moved away from and out of contact with a respective terminal part of the other of said connectors so as to interrupt the electrical connection therebetween.

4. A cordless electrical appliance as claimed in claim 2 or 3 wherein one of said connectors (7) comprises terminal pins (4,5,6) and the other of said connectors (2) comprises spring terminals (10,11,12).

5. A cordless electrical appliance as claimed in claim 2 or 3 or 4 wherein one of said connectors (2) comprises spring terminals (10,11,12) adapted to be moved by said protective control (1) out of electrical contact with the other of said connectors (7).

6. A cordless electrical appliance as claimed in any preceding claim wherein the base connector comprises spring terminals (10,11,12) within an upstand (2) adapted to mate with a connector part (7) of the appliance (3) when the appliance part is operatively seated on the base, the upstand (2) having apertures (13,14,15) shaped to receive elongate terminal pins (4,5,6) of the appliance connector (7) and the spring terminals (10,11,12) of the base connector being adapted to engage said terminal pins (4,5,6) when the same are received within said apertures (13,14,15) and the appliance part is operatively seated on the base.

7. A cordless electrical appliance as claimed in claim 6 wherein the terminal pins (4,5,6) of the appliance connector (7) extend in a direction generally transverse to the direction of movement of the appliance part for mating the appliance part with the base part.

8. A cordless electrical appliance as claimed in claim 6 or 7 wherein the spring terminals (10,11,12) are constituted by cantilevered leaf springs each adapted to make contact with the end of a respective one of said elongate terminal pins (4,5,6).

9. A cordless electrical appliance as claimed in claim 8 wherein the cantilevered leaf springs (10,11,12) are formed of a base metal (eg. brass) and carry silver contacts (37) for engaging the terminal pins (4,5,6) of the appliance part.

10. A cordless electrical appliance as claimed in claim 8 or 9 wherein the cantilevered leaf springs (10,11,12) extend generally in the direction of movement of the terminal pins (4,5,6) for mating the appliance connector (7) with the base connector (2).

11. A cordless electrical appliance as claimed in any of claims 6 to 10 wherein the apertures (13,14,15) in the upstand (2) extend into adjoining forward and upper surfaces (16,17) of the upstand (2) so as to facilitate mating of the appliance part connector (7) with the base connector (2).

12. A cordless electrical appliance as claimed in any of claims 6 to 11 wherein the upstand (2) is defined by a moulded plastics housing (30) and a moulded plastics member (31) fits into said housing (30) and defines accommodation therein for the spring terminals (10,11,12), the moulded plastics member (31) being arranged to form a sub-assembly with the spring terminals (10,11,12) and having wall portions which separate the spring terminals (10,11,12) from one another.

13. A cordless electrical appliance as claimed in any of the preceding claims wherein the protective control (1) in the appliance part (3) includes a mechanical linkage to electrical connector parts (10,11,12) in the base part of the cordless electrical appliance, said mechanical linkage inhibiting electrical connection between the base and appliance parts when the protective control (1) has operated.

14. A cordless electrical appliance as claimed in claim 13 wherein the mechanical linkage includes a push-rod.

15. A cordless electrical appliance as claimed in claim 14 wherein the push-rod is arranged to act upon one or more spring terminals (10,11,12) in the base part of the cordless electrical appliance.

16. A cordless electrical appliance as claimed in any of the preceding claims wherein a connector that is provided on the appliance part is a conventional three pin connector having its three pins (4,5,6) extending generally horizontally.

17. A cordless electrical appliance as claimed in any of the preceding claims wherein the appliance part comprises an electrically heated water boiling vessel.

18. A cordless electrical appliance as claimed in any of the preceding claims wherein terminal pins (4,5,6) of a connector provided in the appliance part are formed of copper or of a copper alloy having a thermal conductivity approaching that of copper and have a thick film layer of silver with a small amount of antimony, the silver/antimony layer preferably having a thickness of at least 30 microns and preferably including about 1% of antimony.

## Patentansprüche

1. Schnurloses Elektrogerät, ein Geräteteil (3) und ein Sockelteil umfassend, wobei das Geräteteil (3) eine Schutzsteuerung (1) aufweist, und die gleichen Anschlüsse (2, 7), die, indem sie miteinander verbunden werden, dem Geräteteil über das Sockelteil Strom zuführen, wenn sich das Geräteteil auf dem Sockelteil befindet, verwendet werden, um das Geräteteil auf das Wirken der Schutzsteuerung hin von der Stromversorgung zu trennen.

2. Schnurloses Elektrogerät, ein Geräteteil (3) und ein Sockelteil umfassend, wobei das Geräteteil (3) ausgestattet ist, eine elektrische Verbindung zwischen dem im Sockelteil vorgesehenen Anschluß (2) und dem im Geräteteil vorgesehenen Anschluß herzustellen, indem das Geräteteil (3) auf das Sockelteil gesetzt wird, und das Geräteteil (3) eine Schutzsteuerung (1) umfaßt, die so ausgeführt ist, daß sie bestimmt, ob die Anschlüsse (2, 7) elektrisch untereinander verbunden sind.

3. Schnurloses Elektrogerät nach Anspruch 2, wobei die Schutzsteuerung (1) einen wärmeempfindlichen Schalter aufweist, der bei einer bestimmten, vorgewählten Temperatur anspricht, und einer der Anschlüsse (2, 7) mindestens ein Anschlußteil aufweist, das funktional mit dem Schalter der Steuerung (1) verbunden ist und gegenüber den anderen Anschlüssen beweglich angeordnet ist, wobei beim Ansprechen des Schalters das Anschlußteil weg von und außer Kontakt mit dem jeweiligen Anschlußteil des anderen Anschlusses bewegt wird, um die zwischen den Anschlußteilen bestehende elektrische Verbindung zu unterbrechen.

4. Schnurloses Elektrogerät nach Anspruch 2 oder 3, wobei einer der Anschlüsse (7) Anschlußstifte (4, 5, 6) und der andere Anschluß (2) Anschlußfedern (10, 11, 12) aufweist.

5. Schnurloses Elektrogerät nach Anspruch 2, 3 oder 4, wobei einer der Anschlüsse (2) Anschlußfedern (10, 11, 12) aufweist, die von der Schutzsteuerung (1) von den anderen Anschlüssen (7) getrennt werden können.

6. Schnurloses Elektrogerät nach einem der vorhergehenden Ansprüche, wobei der Sockelanschluß innerhalb eines Aufbaus (2) Anschlußfedern (10, 11, 12) und Schlitze (13, 14, 15) aufweist, wobei sich der Aufbau (2) in ein Anschlußstück (7) des Geräts (3) fügt, wenn das Geräteteil funktionsbereit auf dem Sockel sitzt, und die Schlitze so gestaltet sind, daß sie längliche Anschlußstifte (4, 5, 6) des Geräteanschlusses (7) aufnehmen, und die Anschlußfedern (10, 11, 12) des Sockelanschlusses mit den Anschlußstiften (4, 5, 6) in Eingriff stehen können, wenn diese in die Schlitze (13, 14, 15) eingeführt sind, und sich das Geräteteil funktionsbereit auf dem Sockel befindet.

7. Schnurloses Elektrogerät nach Anspruch 6, wobei die Anschlußstifte (4, 5, 6) des Geräteanschlusses (7) im wesentlichen transversal zur Bewegungsrichtung beim Koppeln des Geräteteils mit dem Sockelteil verlaufen.

8. Schnurloses Elektrogerät nach Anspruch 6 oder 7, wobei die Anschlußfedern (10, 11, 12) von einseitig eingespannten Zungenfedern (10, 11, 12) gebildet werden, deren jede einen Kontakt mit dem Ende des entsprechenden länglichen Anschlußstiftes (4, 5, 6) bilden kann.

9. Schnurloses Elektrogerät nach Anspruch 8, wobei die Anschlußfedern (10, 11, 12) aus einem Trägermetall (z.B. Messing) geformt sind und Silberkontakte (37) tragen, die mit den Anschlußstiften (4, 5, 6) des Geräteteils in Eingriff sind.

10. Schnurloses Elektrogerät nach Anspruch 8 oder 9, wobei die einseitig eingespannten Zungenfedern (10, 11, 12) im wesentlichen in der Bewegungsrichtung der Anschlußstifte (4, 5, 6) beim Koppeln des Geräteanschlusses (7) mit dem Sockelanschluß (2) verlaufen.

11. Schnurloses Elektrogerät nach einem der Ansprüche 6 bis 10, wobei die Schlitze (13, 14, 15) im Aufbau (2) bis zu angrenzenden vorderen und oberen Flächen (16, 17) des Aufbaus (2) verlaufen, um das Koppeln des Geräteteilanschlusses (7) mit dem Sockelanschluß (2) zu ermöglichen.

12. Schnurloses Elektrogerät nach einem der Ansprüche 6 bis 11, wobei der Aufbau (2) durch ein formgepreßtes Kunststoffgehäuse (30) und ein in das Gehäuse (30) passendes Kunststofformteil (31) definiert ist, wobei das Kunststofformteil (31) die Anschlußfedern (10, 11, 12) aufnimmt, mit diesen eine Unterbaugruppe bildet und Wandstücke aufweist, die die Anschlußfedern (10, 11, 12) voneinander trennen.

13. Schnurloses Elektrogerät nach einem der vorhergehenden Ansprüche, wobei die Schutzsteuerung (1) im Geräteteil (3) mechanisch mit den elektrischen Anschlußteilen (10, 11, 12) im Sockelteil des schnurlosen Elektrogerätes gekoppelt ist, wobei die mechanische Kopplung eine elektrische Verbindung zwischen dem Sockel und den Geräteteilen sperrt, wenn die Schutzsteuerung angesprochen hat.

14. Schnurloses Elektrogerät nach Anspruch 13, wobei die mechanische Kopplung einen Schubstab umfaßt.

15. Schnurloses Elektrogerät nach Anspruch 14, wobei der Schubstab auf eine oder mehrere Anschlußfedern (10, 11, 12) im Sockelteil des schnurlosen Elektrogeräts wirkt.

16. Schnurloses Elektrogerät nach einem der vorhergehenden Ansprüche, wobei der im Geräteteil vorgesehene Anschluß ein konventioneller Dreistiftanschluß mit drei im wesentlichen horizontal verlaufenden Stiften (4, 5, 6) ist.

17. Schnurloses Elektrogerät nach einem der vorhergehenden Ansprüche, wobei das Geräteteil einen elektrisch beheizten Wasserkocher umfaßt.

18. Schnurloses Elektrogerät nach einem der vorhergehenden Ansprüche, wobei die Anschlußstifte (4, 5, 6) des im Geräteteil vorgesehenen Anschlusses aus Kupfer oder einer Kupferlegierung mit einer Wärmeleitfähigkeit, die der von Kupfer nahekommt, hergestellt sind und mit einem dicken Silberüberzug mit einem geringen Antimongehalt beschichtet sind, wobei die Silber/Antimonschicht vorzugsweise eine Dicke von mindestens 30 Micron aufweist und vorzugsweise etwa 1% Antimon enthält.

## Revendications

1. Appareil électrique sans fil comprenant une partie appareil (3) et une partie formant base, dans lequel la partie appareil (3) a un dispositif (1) de commande de protection, et les mêmes connecteurs (2, 7) qui sont utilisés pour alimenter en énergie la partie appareil par l'intermédiaire de l'unité formant base en les interconnectant l'une à l'autre quand la partie appareil est placée sur l'unité formant base, sont utilisés aussi pour déconnecter la partie appareil de l'alimentation en énergie à la suite du fonctionnement du dispositif de commande de protection.

2. Appareil électrique sans fil comprenant une partie appareil (3) et une partie formant base, la partie appareil (3) étant conçue pour être posée sur la partie formant base afin d'établir une connexion électrique entre un connecteur (2) prévu dans la partie formant base et un connecteur (7) prévu dans la partie appareil (3), et dans lequel la partie appareil (3) comprend un dispositif (1) de commande de protection disposé pour déterminer la capacité desdits connecteurs (2, 7) à établir une connexion électrique l'un avec l'autre.

3. Appareil électrique sans fil selon la revendication 2, dans lequel le dispositif (1) de commande de protection comprend un actionneur thermosensible qui fonctionne à une certaine température prédéterminée, l'un des connecteurs (2, 7) ayant au moins une partie formant borne qui est reliée fonctionnellement à l'actionneur dudit dispositif (1) de commande et est conçu pour être mobile par rapport à l'autre desdits connecteurs, de sorte que, quand l'actionneur fonctionne, la au moins une partie formant borne est éloignée et déconnectée d'une partie correspondante formant borne de l'autre desdits connecteurs de manière à interrompre la liaison électrique entre elles.

4. Appareil électrique sans fil selon la revendication 2 ou 3, dans lequel l'un (7) desdits connecteurs comprend des broches (4, 5, 6) formant bornes et l'autre (2) desdits connecteurs comprend des bornes (10, 11, 12) formant ressorts.

5. Appareil électrique sans fil selon la revendication 2, 3 ou 4, dans lequel l'un (2) desdits connecteurs comprend des bornes (10, 11, 12) formant ressorts conçues pour être déplacées par ledit dispositif (1) de commande de protection pour interrompre le contact électrique avec l'autre (7) desdits connecteurs.

6. Appareil électrique sans fil selon l'une quelconque des revendications précédentes, dans lequel le connecteur de base comprend des bornes (10, 11, 12) formant ressorts dans un élément vertical (2) qui est conçu pour s'emboîter avec une partie (7) formant connecteur de l'appareil (3) lorsque la partie appareil est installée fonctionnellement sur la base, l'élément vertical (2) ayant des ouvertures (13, 14, 15) profilées pour recevoir des broches allongées (4, 5, 6) formant bornes du connecteur (7) d'appareil et les bornes (10, 11, 12) formant ressorts du connecteur de base sont conçues pour entrer en contact avec lesdites broches (4, 5, 6) formant bornes quand celles-ci sont reçues dans lesdites ouvertures (13, 14, 15) et que la partie appareil est installée fonctionnellement sur la base.

7. Appareil électrique sans fil selon la revendication 6, dans lequel les broches (4, 5, 6) formant bornes du connecteur (7) d'appareil s'étendent dans une direction généralement transversale par rapport au sens de déplacement de la partie appareil pour emboîter la partie appareil avec la partie formant base.

8. Appareil électrique sans fil selon la revendication 6 ou 7, dans lequel les bornes (10, 11, 12) formant ressorts sont constituées par des ressorts à lame en porte-à-faux conçus chacun pour établir un contact avec l'extrémité de celle correspondante desdites broches allongées (4, 5, 6) formant bornes.

9. Appareil électrique sans fil selon la revendication 8, dans lequel les ressorts (10, 11, 12) à lame en porte-à-faux sont formés d'un métal de base (par exemple du laiton) et portent des contacts (37) en argent pour entrer en contact avec les broches (4, 5, 6) formant bornes de la partie appareil.

10. Appareil électrique sans fil selon la revendication 8 ou 9, dans lequel les ressorts (10, 11, 12) à lame en porte-à-faux s'étendent généralement dans le sens de déplacement des broches (4, 5, 6) formant bornes pour accoupler le connecteur (7) d'appareil avec le connecteur (2) de base.

11. Appareil électrique sans fil selon l'une quelconque des revendications 6 à 10, dans lequel les ouvertures (13, 14, 15) dans l'élément vertical (2) s'étendent dans des surfaces adjacentes (16, 17) supérieures et avant de l'élément vertical (2) de manière à faciliter l'accouplement du connecteur (7) d'appareil avec le connecteur (2) de base.

12. Appareil électrique sans fil selon l'une quelconque des revendications 6 à 11, dans lequel l'élément vertical (2) est défini par un boîtier moulé (30) en plastique et une pièce moulée (31) en plastique s'emboîte dans ledit boîtier (30) et y définit un espace de logement pour les bornes (10, 11, 12) formant ressorts, la pièce moulée (31) en plastique étant disposée pour former un sous-ensemble avec les bornes (10, 11, 12) formant ressorts et ayant des portions de paroi qui séparent les bornes (10, 11, 12) formant ressorts les unes des autres.

13. Appareil électrique sans fil selon l'une quelconque des revendications précédentes, dans lequel le dispositif (1) de commande de protection dans la partie appareil (3) comprend une liaison mécanique avec les parties électriques (10, 11, 12) de connecteur dans la partie formant base de l'appareil électrique sans fil, ladite liaison mécanique empêchant une liaison électrique entre les parties formant base et appareil quand le dispositif (1) de commande de protection a fonctionné.

14. Appareil électrique sans fil selon la revendication 13, dans lequel la liaison mécanique comprend un poussoir.

15. Appareil électrique sans fil selon la revendication 14, dans lequel le poussoir est disposé pour agir sur une ou plusieurs bornes (10, 11, 12) formant ressorts dans la partie formant base de l'appareil électrique sans fil.

16. Appareil électrique sans fil selon l'une quelconque des revendications précédentes, dans lequel un connecteur qui est prévu sur la partie appareil est un connecteur classique à trois broches ayant ses trois broches (4, 5, 6) s'étendant généralement à l'horizontale.

17. Appareil électrique sans fil selon l'une quelconque des revendications précédentes, dans lequel la partie appareil comprend un récipient pour faire bouillir de l'eau par chauffage électrique.

18. Appareil électrique sans fil selon l'une quelconque des revendications précédentes, dans lequel les broches (4, 5, 6) formant bornes d'un connecteur prévu dans la partie appareil sont formés en cuivre ou en un alliage de cuivre ayant une conductibilité thermique approchant celle du cuivre et ont une couche épaisse d'argent avec une petite proportion d'antimoine, la couche d'argent et d'antimoine ayant de préférence une épaisseur d'au moins 30 micromètres et comprenant de préférence environ 1 % d'antimoine.
